# EUROPÄISCHE PATENTSCHRIFT

(11) **EP 2 316 600 B1**
(45) Veröffentlichungstag und Bekanntmachung des Hinweises auf die Patenterteilung: **14.08.2013**
(21) Anmeldenummer: 10009426.7
(22) Anmeldetag: 02.04.2009
(51) Int. Cl.: B23B 51/02

(54) **Bohrwerkzeug**
Drilling tool
Outil de perçage

(30) Priorität: 03.04.2008 DE 102008017540; 06.06.2008 DE 102008027159
(43) Veröffentlichungstag der Anmeldung: 04.05.2011
(62) Teilanmeldung aus: 09728145.5
(73) Patentinhaber: KENNAMETAL INC., Latrobe, PA 15650-0231 (US)
(72) Erfinder: Jäger, Horst Manfred, 90451 Nürnberg (DE); Zeug, Berthold Heinrich, 90762 Fürth (DE)
(74) Vertreter: FDST Patentanwälte

(56) Entgegenhaltungen:
- EP-A- 1 524 052
- DE-C1- 19 914 170

## Beschreibung

Die Erfindung betrifft ein rotierendes Zerspanungswerkzeug, insbesondere ein Bohrwerkzeug, mit einem Aufnahmeteil und einem Frontteil, die sich entlang einer Mittenachse erstrecken und über eine Mitnehmerverbindung lösbar aneinander befestigt sind.

Bei dem Werkzeug handelt es sich allgemein um ein Rotationswerkzeug für eine spanende Bearbeitung eines Werkstücks. Das Werkzeug ist mehrteilig, insbesondere zweiteilig ausgebildet und umfasst einen Aufnahmeteil und einen Frontteil. Im Falle eines Bohrwerkzeugs ist der Aufnahmeteil der Bohrkörper und der Frontteil der Bohrkopf. Im Falle eines Fräserwerkzeugs wäre der Aufnahmeteil ein Fräserschaft und der Frontteil ein Fräserkopf. Diese beiden sich entlang einer Mittenachse (Axialrichtung) erstreckenden Teile sind über eine Mitnehmerverbindung lösbar aneinander befestigt. Diese weist zwei voneinander getrennte und bezüglich der Mittenachse exzentrisch angeordnete Kupplungspaare auf. Jedes der Kupplungspaare ist hierbei gebildet durch zwei ineinandergreifende Kupplungselemente, nämlich einerseits ein Mitnehmerzapfen und andererseits eine diesen vollständig umschließende Aufnahmetasche. Die Kupplungselemente dienen zum einen zur Übertragung der Drehmomentkräfte zwischen den beiden Teilen. Zum anderen dienen die beiden Kupplungselemente auch zum fluchtenden Ausrichten der beiden Teile miteinander, d.h. über die Kupplungselemente werden die beiden Teile zueinander und bezüglich der Mittenachse zentriert.

Aus der EP-A-1 524 052 ist ein Bohrwerkzeug bekannt mit einem Bohrkopf und einem Bohrkörper. Zwischen den Bohrkopf und dem Bohrkörper ist eine Zwischenlegscheibe zwischengelegt. Der Oberbegriff von Anspruch 1 basiert auf diesem Dokument.

### Aufgabe der Erfindung

Der Erfindung liegt die Aufgabe zugrunde, ein Werkzeug der eingangs genannten Art hinsichtlich seines Rundlaufverhaltens zu verbessern.

### Lösung der Aufgabe

Diese Aufgabe wird durch die Merkmalskombination des Anspruchs 1 gelöst.

Die Erfindung besteht darin, im Koppelungsbereich, also im Bereich der Trennfuge zwischen Bohrerkörper und Bohrerkopf ein Stützelement zwischen zu lagern. Das Stützelement kann aus einem speziell angepassten Werkstoff gefertigt sein und dient der gezielten Stabilisierung des Werkzeugs im Koppelungsbereich. Das Stützelement dient zur Dämpfung etwaiger Bewegungen oder Schwingungen des Bohrerkörpers und des Bohrerkopfs gegeneinander. Insbesondere sollen gegeneinander arbeitende Schwingungen von Bohrerkopf und Bohrerkörper reduziert bzw. neutralisiert werden, um den Schwingverschleiß des Werkzeugs zu verringern. Außerdem soll die Übertragung von Körperschall im Bereich der Trennfuge zwischen Bohrerkörper und Bohrerkopf reduziert bzw. eliminiert werden. Auch diese Reduzierung der Körperschalltransmission führt zu einer Verbesserung der Eigenschaften des Werkzeugs.

Insbesondere eignen sich derartige Werkzeuge für Querbohrungen in Werkstücken mit großer Bohrungstiefe. Darüber hinaus eignen sich die Werkzeuge auch für Bohrungen mit schrägen Bohrungsaustritten.

In einer ersten Ausgestaltung ist das Stützelement als eine zu den aneinandergrenzenden Stirnflächen von Bohrerkörper und Bohrerkopf planparallele Scheibe ausgestaltet. Vorzugsweise steht dieses scheibenförmige Stützelement nach Art eines Gleitringsegments über die Mantelflächen von Bohrerkörper und Bohrerkopf hinaus und stützt so das Bohrwerkzeug gegenüber der Bohrungswand ab. Auf diese Weise wird der Lauf des Bohrwerkzeugs in der Bohrung stabilisiert, während die Schneiden im Bohrerkopf die Bohrungswandung spanend bearbeiten können.

Eine weitere bevorzugte Ausführungsform des Stützelements weist eine ringartige Anformung auf, welche die Mantelflächen entweder des Bohrerkörpers oder des Bohrerkopfs oder von Bohrerkörper und Bohrerkopf zugleich übergreifen. Diese Ausführung hat den Vorteil, dass das Stützelement nach Art eines Gleitrings großflächig an der Bohrungswandung anliegt. Zudem ist bei einer napfartigen Ausgestaltung des Stützelements mit einem als planparallele Scheibe ausgestalteten Grundkörper und einer ringförmigen Anformung eine besonders gute Lagerung des Bohrerkörpers und des Bohrerkopfs im Koppelungsbereich gewährleistet. In weiterer Ausgestaltung können korrespondierende Ausnehmungen zu den im Bohrerkörper und im Bohrerkopf eingeformten Spannuten im Stützelement vorgesehen sein, um den Späneabtransport zu optimieren. Die vergleichsweise große Außenumfangsfläche der ringartigen Anformung am Stützelement ermöglicht die Anbringung von speziellen Führungselementen zur Führung des Bohrwerkzeugs an der Bohrungswand. Diese Führungselemente können leistenförmig, buckelförmig oder in anderen Geometrien ausgestaltet sein zur Verbesserung des Rundlaufs des Werkzeugs in der Bohrung. Diese Führungselemente können stoffschlüssig in die Außenfläche des Ringelements eingelassen sein. Es ist aber auch möglich, sie im Ringelement klemmend zu fixieren.

In weiterer Ausgestaltung kann das Stützelement, insbesondere im Bereich der ringartigen Anformung eine Beschichtung aufweisen. Die Beschichtung kann dazu dienen, den Verschleiß an der Außenfläche des Rings gegenüber der Bohrungswand zu verhindern. Auch kann die Beschichtung die übrigen Schwing- und Transmissionseigenschaften des Werkzeugs beeinflussen.

In einer weiteren Ausführungsform der Erfindung kann die ringartige Anformung, insbesondere in der Ausgestaltung als Aufnahmenapf zugleich als Biegefeder ausgestaltet sein. Bei dieser Ausgestaltung beaufschlagt das Ringelement die Bohrungswand mit ihrer Federkraft und wirkt so einer Abdrängung des Werkzeugs aus seiner zentrierten Lage mit der einwirkenden Federkraft entgegen. Das Werkzeug wird somit federnd an der Bohrungswandung geführt. Auf diese Weise bildet das Stützelement ein Dämpfungsglied für das Werkzeug gegenüber dem zu bearbeitenden Werkstück.

### Beschreibung der Figuren

Ausführungsbeispiele der Erfindung werden im Folgenden anhand der Figuren näher erläutert. Diese zeigen in teilweise schematischer Darstellung:
- Fig. 1: eine Gesamtzeichnung eines Teilbereichs einer ersten Ausführungs- form des Bohrwerkzeugs mit Stützelement,
- Fig. 2: das in Fig. 15 dargestellte Bohrwerkzeug in Explosionsdarstellung,
- Fig. 3: eine Ansicht auf die Koppelungsfläche des Bohrerkopfs gemäß Fig. 15,
- Fig. 4: eine Ansicht eines als planparallele Scheibe ausgebildeten Stütz- elements gemäß Fig. 15,
- Fig. 5: eine Draufsicht auf die Koppelungsfläche des Bohrerkörpers aus Fig. 15,
- Fig. 6: die Explosionsdarstellung eines Bohrerkörpers und eines Stützele- ments mit beidseitigem Aufnahmenapf,
- Fig. 7: die Explosionsdarstellung aus Fig. 20 mit einem Stützelement mit einem in Richtung auf den Bohrerkörper wirksamen Aufnahmenapf,
- Fig. 8: eine gegenüber dem in Fig. 21 gezeigten Ausführungsbeispiel ab- gewandeltes Ausführungsbeispiel eines Stützelements mit vergrö- ßertem Aufnahmenapf,
- Fig. 9: eine Ausführungsform des Stützelements mit Führungselementen an der Außenumfangsfläche der ringförmigen Anformung,
- Fig. 10: eine Ausführungsform einer als Biegefeder ausgestalteten, als Auf- nahmenapf ausgestalteten ringförmigen Anformung und
- Fig. 11: einen Schnitt durch die in Fig. 24 dargestellte, als Biegefeder ausge- staltete, ringartige Anformung.

Gleichwirkende Teile sind in den Fig. mit gleichen Bezugszeichen versehen. Die Mitnehmerverbindung wird nachfolgend anhand eines Bohrwerkzeugs in unterschiedlichen Ausführungsvarianten beschrieben. Die Mitnehmerverbindung lässt sich allgemein auch auf andere Zerspanungswerkzeuge zum Koppeln von zwei Teilen eines Werkzeugs übertragen. Die einzelnen zu den verschiedenen Varianten nachfolgend beschriebenen Merkmale und konstruktiven Ausgestaltungen lassen sich- soweit sie sich nicht ausschließen - auch miteinander kombinieren.

### Beschreibung der Ausführungsbeispiele

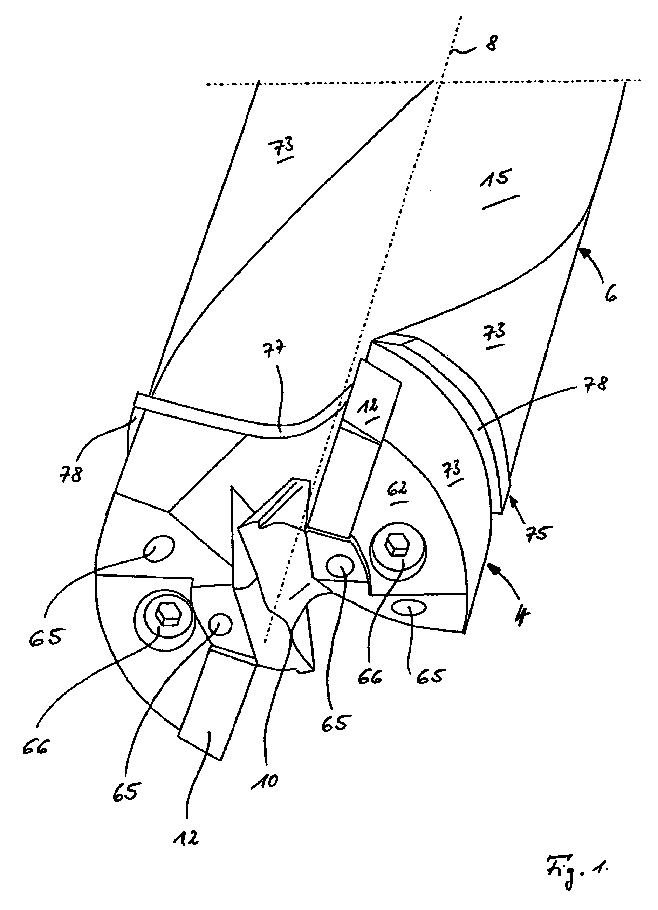

Der Bohrerkopf 4 in Fig. 1 trägt an seiner Schneidseite 62 die Bohrspitze 10 und am Umfang zwei einander gegenüberliegende Schneidplatten 12. Des Weiteren sind im Bereich des Bohrerkopfs 4 Kühlmittelkanäle 65 und Befestigungsmittel 66 vorgesehen. Die Befestigungsmittel 66 dienen beispielsweise zur Befestigung der Schneidplatten 12 oder zur Befestigung von Schneidplattenträgern oder ähnlichem.

Der Schneidseite 62 des Bohrerkopfs 4 abgewandt ist die Kopfkoppelungsseite 67. Die Kopfkoppelungsseite 67 trägt die dem Bohrerkörper 6 zugewandte Stirnfläche des Bohrerkopfs 4. Aus dieser Stirnfläche auf der Kopfkoppelungsseite 67 stehen im Ausführungsbeispiel zwei Mitnehmerzapfen 18 in Richtung auf den Bohrerkörper 6 aus der Kopfkoppelungsseite 67 hinaus. Auch die Mitnehmerzapfen 18 weisen wiederum die rückwärtigen Öffnungen der Kühlmittelkanäle 65 auf.

Die dem Bohrerkopf 4 zugewandte Seite des Bohrerkörpers 6 ist die Schaftkoppelungsseite 70. Die Schaftkoppelungsseite 70 und die Kopfkoppelungsseite 67 bilden den Koppelungsbereich zwischen Bohrerkörper 6 und Bohrerkopf 4. In die Fläche der Schaftkoppelungsseite 70 sind zwei zu den Mitnehmerzapfen 18 komplementär ausgebildete Aufnahmetaschen 20 eingeformt. In den Aufnahmetaschen 20 sind wiederum Kühlmittelkanäle 65 erkennbar, die im Montageendzustand mit den Kühlmittelkanälen 65 am Bohrerkopf 4 fluchten. Die Kühlmittelkanäle 65 gehen also durch das gesamte Bohrwerkzeug hindurch. Schließlich weisen sowohl der Bohrerkopf 4 als auch der Bohrerkörper 6 jeweils eine Zentrierbohrung 72 auf. Des Weiteren erkennbar sind Freiflächen 73 am Bohrerkopf 4 und am Bohrerkörper 6 sowie zwischen den Freiflächen 73 eingebrachte wendelförmige Spannuten 15.

Der Schaftkoppelungsseite 70 ist am Bohrerkörper 6 abgewandt das in den Figuren nicht dargestellte Werkzeugaufnahmeende des Bohrerkörpers 6. Mit dem Werkzeugaufnahmeende ist der Bohrerkörper 6 im Bohrwerkzeug eingespannt.

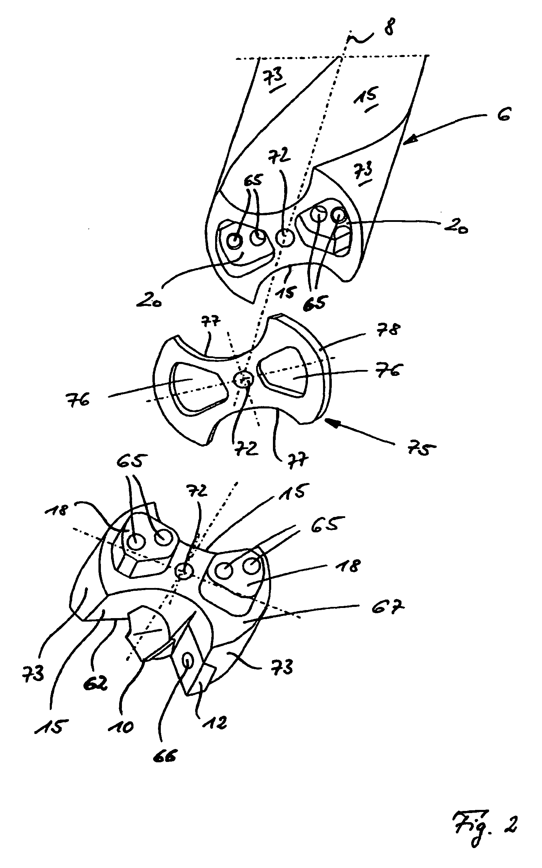

Zwischen dem Bohrerkopf 4 und dem Bohrerkörper 6 ist beim Ausführungsbeispiel gemäß Fig. 1 und Fig. 2 das als planparallele Platte ausgestaltete Stützelement 75 angeordnet. Das Stützelement 75 weist zu der Außenkontur der Mitnehmerzapfen 18 korrespondierende Durchgangsöffnungen 76 auf. Mit Hilfe der Durchgangsöffnungen 76 wird das Stützelement 75 einfach auf den Bohrerkopf 4 aufgeschoben, wobei die Mitnehmerzapfen 18 das Stützelement 75 in den Durchgangsöffnungen 76 durchgreifen. Die Mitnehmerzapfen 18 bilden so einen Formschluss mit dem Stützelement 75. Zu der in Fig. 1 dargestellten Endmontage des Werkzeugs durchgreifen die Mitnehmerzapfen 18 zunächst die Durchgangsöffnungen 76, um sodann in die Aufnahmetaschen 20 im Bohrerkörper 6 formschlüssig einzugreifen. Auch das Stützelement 75 weist eine Zentrierbohrung 72 auf. Des Weiteren weist das Stützelement 75 mit den Spannuten 15 korrespondierende Ausnehmungen 77 auf.

Aus der Darstellung der Fig. 1 ist erkennbar, dass das Stützelement 75 über die von den Freiflächen 73 gebildete Mantelfläche des Bohrerkopfs 4 und des Bohrerkörpers 6 hinaussteht. Bei endmontiertem Bohrwerkzeug bildet das Stützelement 75 somit einen über die Hüllfläche des Bohrwerkzeugs, nämlich des Bohrerkopfs 4 und des Bohrerkörpers 6 hinausstehenden überstehenden Ringbereich 78. Beim Bohrvorgang liegt das Stützelement 75 mit diesem Ringbereich 78 an der Bohrungswandung an und führt so das Werkzeug gegenüber der Bohrungswandung.

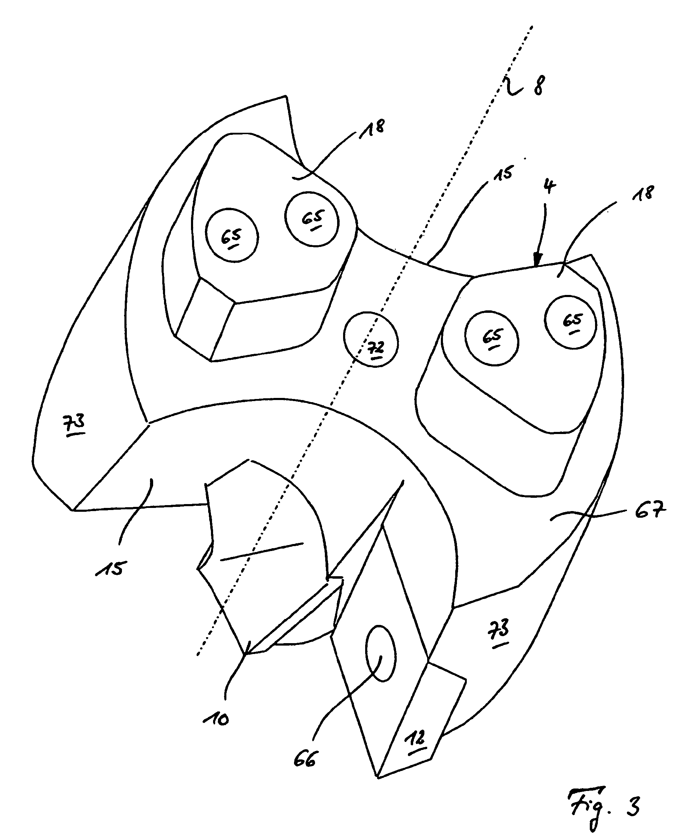

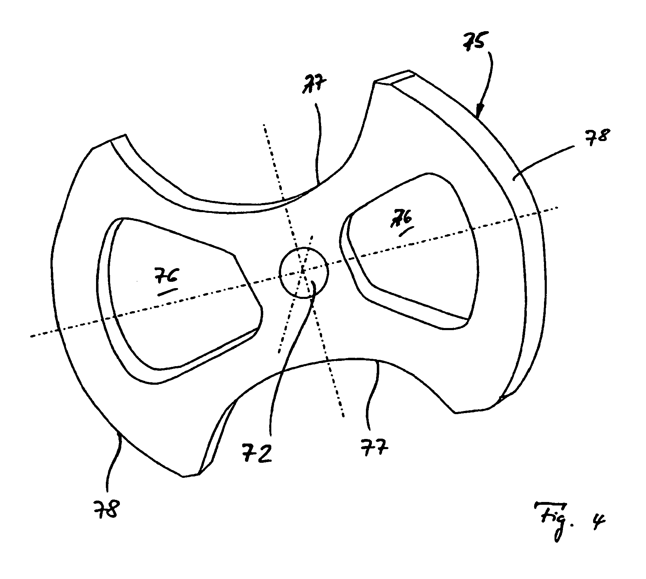

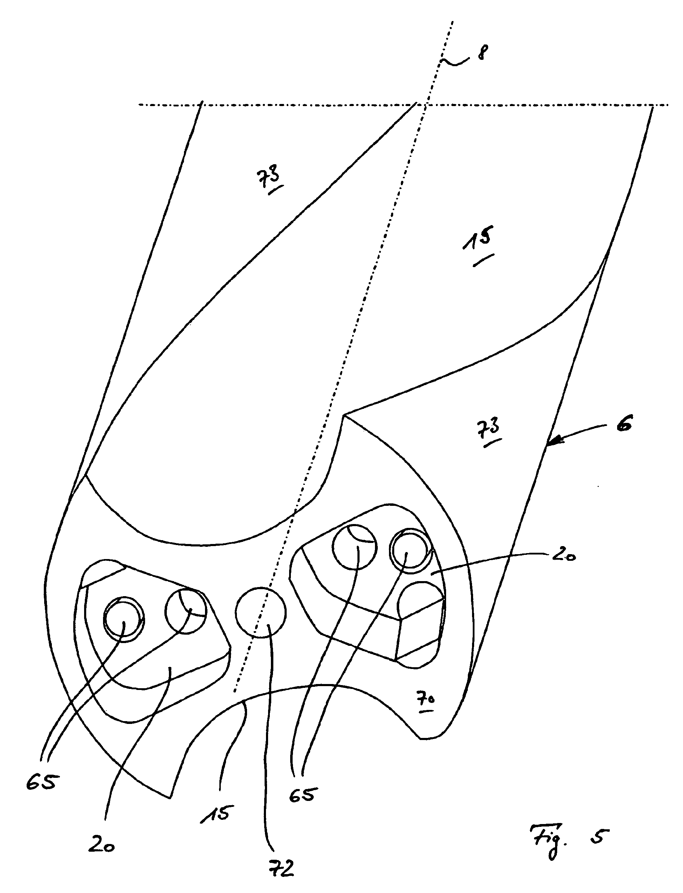

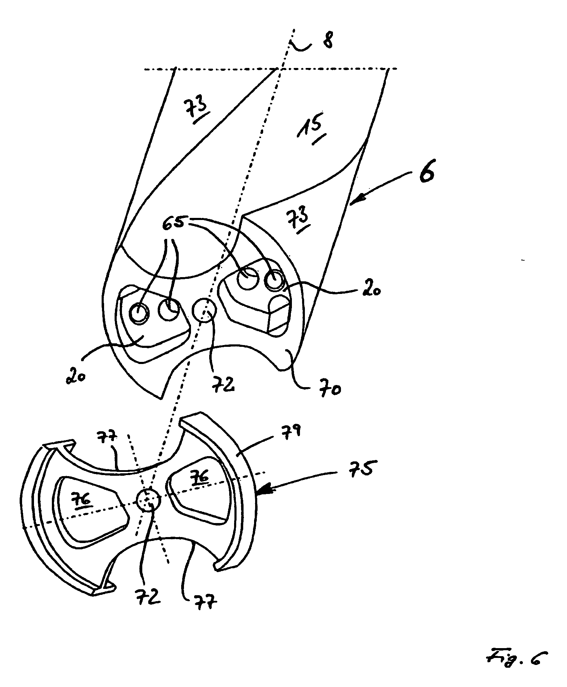

Die Explosionsdarstellung der Fig. 6 zeigt einen mit den Fig. 1 bis 5 identischen Bohrerkörper 6. Das Stützelement 75 weist beim Ausführungsbeispiel gemäß Fig. 6 eine ringartige Anformung 79 auf. Die Anformung 79 überlappt in Richtung der Mittenachse 8 des Bohrwerkzeugs sowohl die Kopfkoppelungsseite 67 des Bohrerkopfs 4 als auch die Schaftkoppelungsseite 70 des Bohrerkörpers 6. Das in Fig. 6 dargestellte Stützelement 75 bildet also einen beidseitigen Aufnahmenapf zur Aufnahme sowohl der Kopfkoppelungsseite 67 des Bohrerkopfs 4 als auch der Schaftkoppelungsseite 70 des Bohrerkörpers 6.

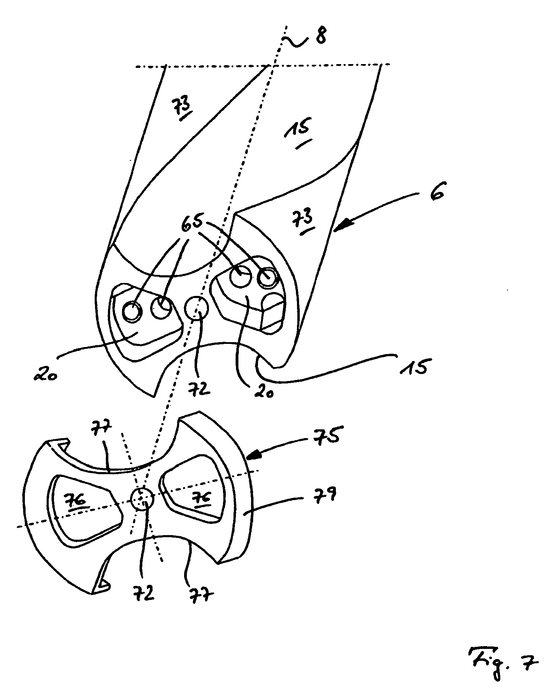

Im Gegensatz dazu weist das in Fig. 7 dargestellte Ausführungsbeispiel des Stützelements 75 ausschließlich eine ringförmige Anformung 79 auf, die sich in Richtung der Mittenachse 8 des Bohrwerkzeugs in Richtung auf die Schaftkoppelungsseite 70 des Bohrerkörpers 6 erstreckt. Mit anderen Worten übergreift die ringförmige Anformung 79 lediglich die Schaftkoppelungsseite 70 des Bohrerkörpers 6 und liegt zugleich als planparallele Platte an der Kopfkoppelungsseite 67 des Bohrerkopfs 4 an.

Im Gegensatz dazu übergreift die ringförmige Anformung 79 bei dem in Fig. 6 dargestellten Ausführungsbeispiel sowohl die Schaftkoppelungsseite 70 des Bohrerkörpers 6 als auch die Kopfkoppelungsseite 67 des Bohrerkopfs 4 und bildet so einen doppelseitigen Aufnahmenapf sowohl für die Schaftkoppelungsseite 70 des Bohrerkörpers 6 als auch die Kopfkoppelungsseite 67 des Bohrerkopfs 4. Das Ausführungsbeispiel gemäß Fig. 7 hingegen bildet ausschließlich einen Aufnahmenapf für den Bohrerkörper 6, nämlich die Schaftkoppelungsseite 70 des Bohrerkörpers 6.

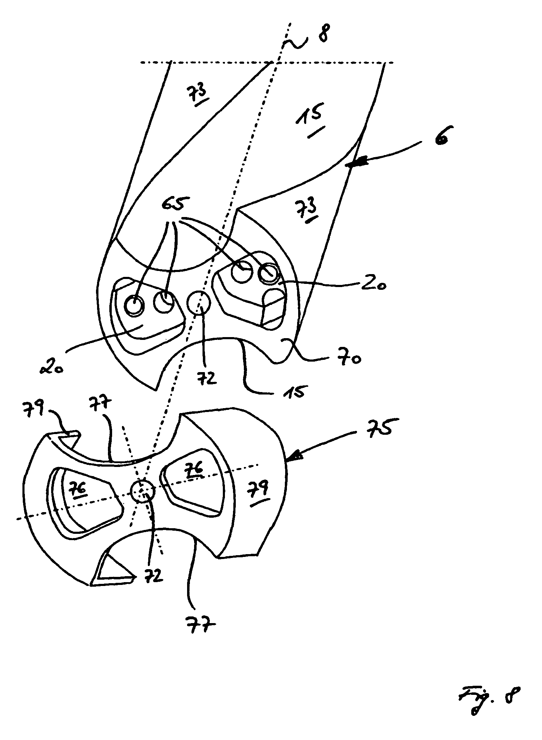

Das in Fig. 8 dargestellte Ausführungsbeispiel zeigt wiederum ein Stützelement 75 mit einem ausschließlich in Bezug auf den Bohrerkörper 6 wirksamen Aufnahmenapf und einer am Bohrerkopf 4 anliegenden planparallelen Platte. Im Unterschied zu dem in Fig. 7 gezeigten Ausführungsbeispiel überlappt die ringförmige Anformung 79 die Schaftkoppelungsseite 70 des Bohrerkörpers 6 bei diesem Ausführungsbeispiel um einen deutlich größeren Betrag. Die Erstreckung der Anformung 79 in Richtung der Mittenachse 8 ist bei montiertem Werkzeug deutlich größer als bei dem in Fig. 7 dargestellten Ausführungsbeispiel. Auf diese Weise ist es möglich, an der ringförmigen Anformung 79 Führungselemente 81 anzuordnen.

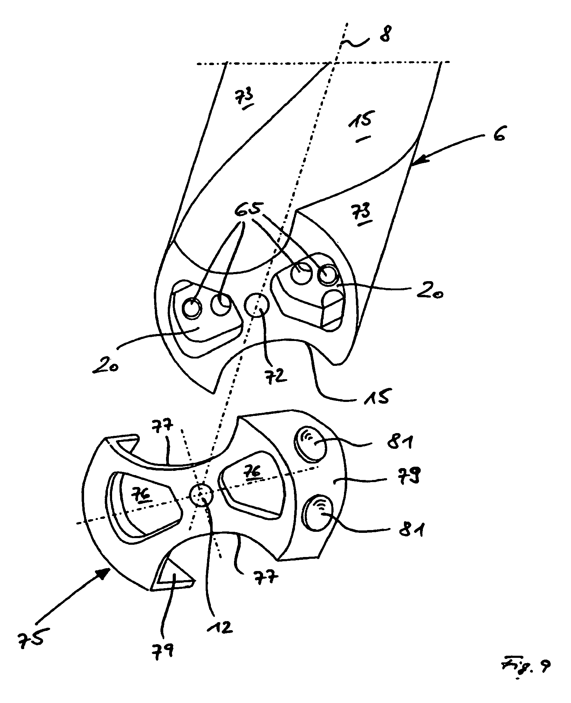

Das in Fig. 9 dargestellte ausgeführte Ausführungsbeispiel zeigt als Beispiel für solche Führungselemente 81 paarweise auf der ringförmigen Anformung 79 angebrachte Führungswarzen. Diese Führungselemente 81 gleiten beim Bearbeitungsprozess an der Bohrungswandung.

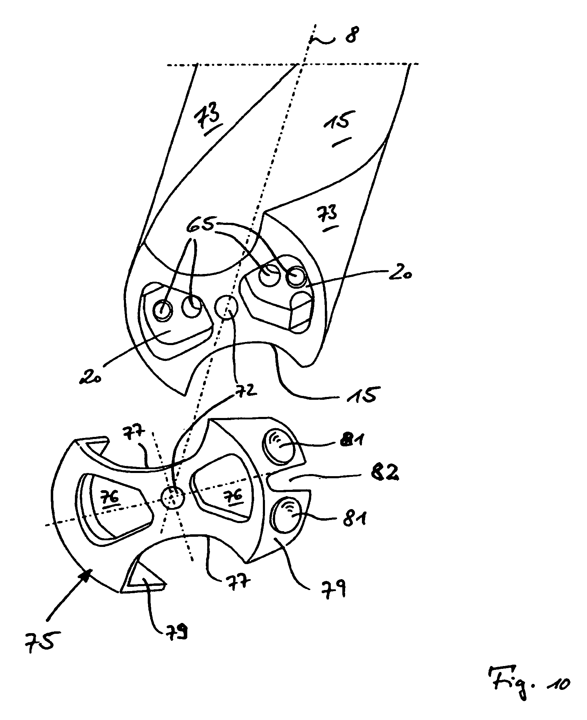

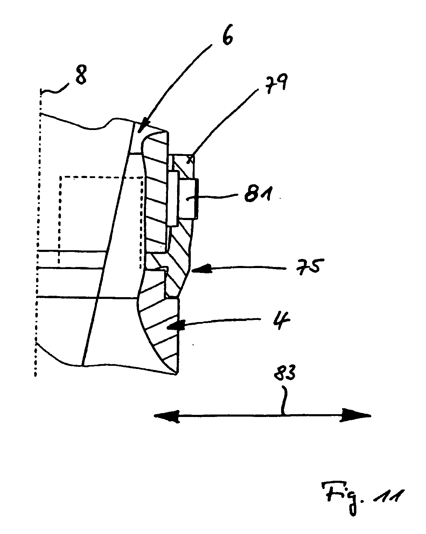

Das in Fig. 10 dargestellte Ausführungsbeispiel zeigt wiederum ein Stützelement 75 mit ausschließlich in Richtung auf den Bohrerkörper 6 wirksamen Aufnahmenapf. Die ringförmige Anformung 79 ist hierbei als Biegefeder ausgestaltet. Hierfür ist in die ringförmige Anformung 79 ein Federschlitz 82 eingebracht. Aus der Darstellung der Fig. 11 ist weiter erkennbar, dass die Führungselemente 81 vom Bohrerkörper 6 her in die ringförmige Anformung 79 eingeschoben sind. Aufgrund seiner Federwirkung ist die ringförmige Anformung 79 in der quer zur Mittenachse 8 verlaufenden Querrichtung 83 federnd am Bohrwerkzeug gelagert. Das Stützelement 75 ist so als Biegefederelement ausgebildet.

Selbstverständlich ist es möglich, sämtliche Ausführungsformen der Fig. 7 bis Fig. 10 hinsichtlich der auf den Bohrerkörper 6 bezogenen Gestaltung des Stützelements 75 als Aufnahmenapf auch auf den Bohrerkopf 4 gleichermaßen zu übertragen. Auch sind Gestaltungen denkbar, bei welchen ein beidseitig wirksamer Aufnahmenapf nicht nur die Schaftkoppelungsseite 70 des Bohrerkörpers 6 übergreift, sondern auch einen kleineren Bereich der Kopfkoppelungsseite 67 des Bohrerkopfs 4.

## Patentansprüche

1. Mehrteiliges, aus mindestens einem Bohrerkörper (6) und einem daran ankoppelbaren Bohrerkopf (4) zusammengesetztes Bohrwerkzeug mit einem zwischen dem Bohrerkörper (6) und dem Bohrerkopf (4) angeordneten Stützelement (75),
**dadurch gekennzeichnet dass** das Stützelement (75) zur Bildung eines Gleitabschnitts einen über die Mantelfläche des Bohrerkörpers (6) und des Bohrerkopfs (4) hinausstehenden Ringbereich (78) aufweist.

2. Werkzeug nach Anspruch 1,
**dadurch gekennzeichnet,**
**dass** das Stützelement (75) eine zu den im Koppelungsbereich einander zugeordneten Stirnflächen von Bohrerkörper (6) und Bohrerkopf (4) planparallele Scheibe umfasst.

3. Werkzeug nach Anspruch 2,
**gekennzeichnet durch**
eine ringartige Anformung (79) am Stützelement (75) derart, dass die Anformung (79) die Mantelfläche des Bohrerkörpers (6) oder des Bohrerkopfs (4) oder beide Mantelflächen im Koppelungsbereich teilweise übergreift.

4. Werkzeug nach Anspruch 3,
**dadurch gekennzeichnet,**
**dass** die Scheibe und die Anformung (79) jeweils einen Aufnahmenapf für die Enden des Bohrerkörpers (6) und des Bohrerkopfs (4) im Koppelungsbereich bilden.

5. Werkzeug nach einem der Ansprüche 1 bis 4,
**gekennzeichnet durch**
korrespondierende Ausnehmungen (77) zu den im Bohrerkörper (6) und im Bohrerkopf (4) eingeformten Spannuten (15).

6. Werkzeug nach einem der Ansprüche 3 bis 5,
**gekennzeichnet durch**
Führungselemente (81) an der Außenumfangsfläche der ringartigen Anformung (79) zur Führung des Bohrwerks an der Bohrungswand.

7. Werkzeug nach einem der Ansprüche 3 bis 6,
**dadurch gekennzeichnet,**
**dass** das Stützelement (75) zumindest teilweise beschichtet ist.

8. Werkzeug nach Anspruch 7,
**gekennzeichnet durch**
eine verschleißhemmende Beschichtung, insbesondere an der Außenumfangsfläche der ringartigen Anformung (79).

9. Werkzeug nach einem der Ansprüche 3 bis 8,
**gekennzeichnet durch**
verschleißhemmende Elemente an der Außenumfangsfläche der ringförmigen Anformung (79).

10. Werkzeug nach einem der Ansprüche 3 bis 9,
**dadurch gekennzeichnet,**
**dass** die ringartige Anformung (79) als Biegefeder ausgestaltet ist.

## Claims

1. Multipart boring tool composed of at least one borer body (6) and a borer head (4) that is couplable thereto, having a support element (75) arranged between the borer body (6) and the borer head (4), **characterized in that**, in order to form a sliding portion, the support element (75) has an annular region (78) protruding beyond the lateral surface of the borer body (6) and the borer head (4).

2. Tool according to Claim 1, **characterized in that** the support element (75) comprises a plate which is plane-parallel to the end faces, assigned to one another in the coupling region, of the borer body (6) and the borer head (4).

3. Tool according to Claim 2, **characterized by** a ring-like integrally formed portion (79) on the support element such that the integrally formed portion (79) partially engages over the lateral surface of the borer body (6) or of the borer head (4) or both lateral surfaces in the coupling region.

4. Tool according to Claim 3, **characterized in** the plate and the integrally formed portion (79) each form a receiving cup for the ends of the borer body (6) and of the borer head (4) in the coupling region.

5. Tool according to one of Claims 1 to 4, **characterized by** corresponding recesses (77) with respect to flutes (15) formed in the borer body (6) and in the borer head (4).

6. Tool according to one of Claims 3 to 5, **characterized by** guide elements (81) on the outer circumferential surface of the ring-like integrally formed portion (79) for guiding the boring machine on the bore wall.

7. Tool according to one of Claims 3 to 6, **characterized in that** the support element (75) is at least partially coated.

8. Tool according to Claim 7, **characterized by** a wear-inhibiting coating, in particular on the outer circumferential surface of the ring-like integrally formed portion (79).

9. Tool according to one of Claims 3 to 8, **characterized by** wear-inhibiting elements on the outer circumferential surface of the annular integrally formed portion (79).

10. Tool according to one of Claims 3 to 9, **characterized in that** the ring-like integrally formed portion (79) is configured as a bending spring.

## Revendications

1. Outil de perçage en plusieurs parties, constitué d'au moins un corps de foret (6) et d'une tête de foret (4) pouvant être raccordée sur celui-ci, avec un élément de support (75) disposé entre le corps de foret (6) et la tête de foret (4),
**caractérisé en ce que** l'élément de support (75) présente, pour former une portion de glissement, une région annulaire (78) faisant saillie au-delà de la surface d'enveloppe du corps de foret (6) et de la tête de foret (4).

2. Outil selon la revendication 1,
**caractérisé en ce que**
l'élément de support (75) comprend un disque plan parallèle aux surfaces frontales, associées les unes aux autres dans la région d'accouplement, du corps de foret (6) et de la tête de foret (4).

3. Outil selon la revendication 2,
**caractérisé par**
une formation (79) de type annulaire sur l'élément de support (75), de telle sorte que la formation (79) vienne en prise en partie par le dessus avec la surface d'enveloppe du corps de foret (6) ou de la tête de foret (4) ou avec les deux surfaces d'enveloppe dans la région d'accouplement.

4. Outil selon la revendication 3,
**caractérisé en ce que**
le disque et la formation (79) forment à chaque fois une coupelle de réception pour les extrémités du corps de foret (6) et de la tête de foret (4) dans la région d'accouplement.

5. Outil selon l'une quelconque des revendications 1 à 4,
**caractérisé par**
des évidements (77) correspondant aux rainures d'enlèvement de copeaux (15) formées dans le corps de foret (6) et dans la tête de foret (4).

6. Outil selon l'une quelconque des revendications 3 à 5,
**caractérisé par**
des éléments de guidage (81) sur la surface périphérique extérieure de la formation (79) de forme annulaire pour le guidage de l'outil de perçage contre la paroi de l'alésage.

7. Outil selon l'une quelconque des revendications 3 à 6,
**caractérisé en ce que**
l'élément de support (75) est au moins en partie revêtu.

8. Outil selon la revendication 7,
**caractérisé par**
un revêtement réduisant l'usure, en particulier sur la surface périphérique extérieure de la formation (79) de forme annulaire.

9. Outil selon l'une quelconque des revendications 3 à 8,
**caractérisé par**
des éléments réduisant l'usure sur la surface périphérique extérieure de la formation (79) de forme annulaire.

10. Outil selon l'une quelconque des revendications 3 à 9,
**caractérisé en ce que**
la formation (79) de forme annulaire est configurée sous forme de ressort flexible.
